# EUROPÄISCHE PATENTSCHRIFT

(11) **EP 3 036 140 B1**
(45) Veröffentlichungstag und Bekanntmachung des Hinweises auf die Patenterteilung: **06.09.2017**
(21) Anmeldenummer: 14745087.8
(22) Anmeldetag: 30.07.2014
(51) Int. Cl.: B60W 20/00, B60W 10/08, B60K 1/02, B60L 15/20

(54) **FAHRZEUGSTEUERUNG FÜR EIN ZUMINDEST TEILWEISE ELEKTRISCH ANGETRIEBENES FAHRZEUG**
VEHICLE CONTROL SYSTEM FOR AN AT LEAST PARTIALLY ELECTRICALLY DRIVEN VEHICLE
COMMANDE DE VÉHICULE POUR VÉHICULE AU MOINS PARTIELLEMENT ENTRAÎNÉ ÉLECTRIQUEMENT

(30) Priorität: 21.08.2013 DE 102013013953
(43) Veröffentlichungstag der Anmeldung: 29.06.2016
(73) Patentinhaber: Audi AG, 85045 Ingolstadt (DE)
(72) Erfinder: BUROW, Clemens, 80339 München (DE); THEN, Florian, 85051 Ingolstadt (DE)
(86) Internationale Anmeldenummer: PCT/EP2014/002084
(87) Internationale Veröffentlichungsnummer: WO 2015/024623

(56) Entgegenhaltungen:
- DE-A1-102004 046 194
- DE-A1-102011 119 207
- DE-T2- 69 414 451
- US-A1- 2010 222 953

## Beschreibung

Die vorliegende Erfindung betrifft ein Verfahren zum Steuern eines wenigstens zwei mittels jeweils einer elektrischen Antriebseinheiten mechanisch gekoppelten Fahrzeugräder umfassenden Antriebsvorrichtung eines zumindest teilweise elektrisch angetriebenen Fahrzeugs, wobei die elektrischen Antriebseinheiten jeweils in einem motorischen Betrieb elektrische Energie von einem elektrischen Energiespeicher beziehen und/oder in einem generatorischen Betrieb dem elektrischen Energiespeicher elektrische Energie zuführen, wobei die elektrischen Antriebseinheiten im bestimmungsgemäßen Betrieb ein Drehmoment gemäß einer antriebseinheitsindividuellen Drehmomentvorgabe einer Fahrzeugsteuerung bereitstellen. Die Erfindung betrifft ferner eine Fahrzeugsteuerung sowie ein Fahrzeug mit der Fahrzeugsteuerung.

Fahrzeuge der gattungsgemäßen Art sind dem Grunde nach bekannt, so dass es eines gesonderten druckschriftlichen Nachweises hierfür nicht bedarf. Fahrzeuge, auch Kraftfahrzeuge genannt, dienen der Fortbewegung an Land. Umfasst die Antriebsvorrichtung des Fahrzeugs neben einer elektrischen Maschine auch ergänzend eine Verbrennungskraftmaschine, so wird ein solches Fahrzeug in der Regel als Hybridfahrzeug bezeichnet. Ein Fahrzeug, dessen Antriebsvorrichtung ausschließlich eine oder mehrere elektrische Maschinen umfasst, wird in der Regel als Elektrofahrzeug bezeichnet. Die zum Einsatz kommenden elektrischen Maschinen für gattungsgemäße Fahrzeuge sind in der Regel rotierende elektrische Maschinen, die beispielsweise eine Gleichstrommaschine, eine Drehstrommaschine oder dergleichen sein können.

Für den Fahrbetrieb ist die elektrische Maschine beziehungsweise sind die elektrischen Maschinen elektrisch an eine Batterie des Fahrzeugs angeschlossen. Die Batterie ist in der Regel als Hochvolt-Batterie ausgebildet und stellt einen maximalen Strom zur Verfügung, der von den elektrischen Maschinen konsumiert werden kann. Ein Teilwert dieses maximalen elektrischen Stroms wird jeweils an die elektrischen Maschinen übermittelt. Eine der jeweiligen elektrischen Maschine zugeordnete Steuerung berechnet aus dem Wert dieses Stroms ein minimales beziehungsweise maximales Drehmoment, das unter Bereitstellung dieses maximalen Stromes mittels der jeweiligen elektrischen Maschine erreichbar ist. Diese aus den an die elektrischen Maschinen übermittelten Leistungen ermittelten maximalen Drehmomente werden an eine Fahrzeugsteuerung des Fahrzeugs übermittelt.

Mittels der Fahrzeugsteuerung wird eine Antriebsdrehmomentvorgabe eines Fahrers des Fahrzeugs auf die verfügbaren elektrischen Maschinen unter Beachtung der maximalen Drehmomente der elektrischen Maschinen aufgeteilt Hierdurch ist sichergestellt, dass der maximale Strom der Fahrzeugbatterie nicht überschritten wird. Dadurch wird ein unzulässiger Betriebszustand der Fahrzeugbatterie vermieden.

Ein Verfahren ist beispielsweise gemäß dem Oberbegriff des Anspruchs 1 aus DE 10 2011 119207 A1 bekannt. Obwohl sich diese Vorgehensweise bewährt hat, erweist es sich als nachteilig, dass einzelne elektrische Maschinen nicht über die ihnen zugeordnete Leistung hinaus betrieben werden können, auch wenn die Fahrzeugbatterie noch Energiereserven bereitstellen kann. Darüber hinaus verfügt die Fahrzeugsteuerung nicht über eine Rückmeldung der jeweiligen Umrichter, welcher Drehmomentstellbereich dem Grunde nach zur Verfügung steht. In der Regel sind nämlich sowohl der Umrichter als auch die elektrische Maschine zumindest zeitweise mit einer höheren Leistung als die zugeordnete Leistung betreibbar.

Es ist somit die Aufgabe der Erfindung, die durch die Fahrzeugbatterie bereitgestellte Leistung besser nutzen zu können.

Als Lösung schlägt die Erfindung ein Verfahren gemäß Anspruch 1 sowie eine Fahrzeugsteuerung gemäß Anspruch 7 und ein Fahrzeug gemäß Anspruch 8 vor. Weitere vorteilhafte Ausgestaltungen ergeben sich durch Merkmale der abhängigen Ansprüche.

Insbesondere schlägt die Erfindung verfahrensseitig ein Verfahren zum Steuern einer wenigstens zwei mittels jeweils einer elektrischen Antriebseinheit gekoppelten Fahrzeugräder umfassenden Antriebsvorrichtung eines Fahrzeugs vor, wobei die elektrischen Antriebseinheiten jeweils in einem motorischen Betrieb elektrische Energie von einem elektrischen Energiespeicher beziehen und/oder in einem generatorischen Betrieb dem elektrischen Energiespeicher elektrische Energie zuführen, wobei die elektrischen Antriebseinheiten im bestimmungsgemäßen Betrieb ein Drehmoment gemäß einer antriebseinheitsindividuellen Drehmomentvorgabe einer Fahrzeugsteuerung bereitstellen, wobei ein maximales Gesamtdrehmoment unter Berücksichtigung einer maximal verfügbaren Leistung des elektrischen Energiespeichers ermittelt und mittels des maximalen Gesamtdrehmoments eine aus den antriebseinheitsindividuellen Drehmomentvorgaben gebildete Summe begrenzt wird.

Ergänzend können die Antriebseinheiten jeweils ihr maximal stellbares Drehmoment an die Fahrzeugsteuerung übermitteln, sodass mittels der Fahrzeugsteuerung maximale Werte für die antriebseinheitsindividuellen Drehmomentvorgaben nicht nur unter Berücksichtigung einer maximal verfügbaren Leistung des elektrischen Energiespeichers sondern auch unter ergänzender Berücksichtigung der jeweils maximalen Drehmomente der Antriebseinheiten ermittelt werden kann.

Die Erfindung rückt somit ab von dem Prinzip der festen Leistungszuordnung zu den jeweiligen elektrischen Antriebseinheiten. Die Antriebseinheit umfasst in der Regel wenigstens eine elektrische Maschine, die vorzugsweise als rotierende elektrische Maschine ausgebildet ist. Darüber hinaus kann die Antriebseinheit einen Umrichter umfassen, an den die elektrische Maschine angeschlossen ist. Weiterhin kann die Antriebseinheit eine eigene Steuerung aufweisen.

Das maximale Gesamtdrehmoment bildet somit einen Vergleichswert, der zum Vergleichen der aus den antriebseinheitsindividuellen Drehmomentvorgaben gebildeten Summe herangezogen wird. Dadurch kann erreicht werden, dass die Summer der antriebseinheitsindividuellen Drehmomentvorgaben so begrenzt wird, dass die maximale verfügbare Leistung des elektrischen Energiespeichers nicht überschritten wird. Zugleich kann jede der Antriebseinheiten in einem weiten Bereich betrieben werden, so beispielsweise indem eine erste Antriebseinheit ihr maximal mögliches Drehmoment bereitstellt. Zugleich kann eine andere Antriebseinheit ein Drehmoment derart bereitstellen, das eine Differenz zwischen der für die erste Antriebseinheit erforderliche Leistung und der maximal verfügbaren Leistung nicht überschritten wird, sofern nicht bereits die Leistung der ersten Antriebseinheit die maximal verfügbare Leistung für sich beansprucht. Die Leistungsverteilung der maximal verfügbaren Leistung kann unter der Randbedingung der maximal verfügbaren Leistung im wesentlichen frei erfolgen. Gegebenenfalls können als weitere Randbedingungen die maximal stellbaren Drehmomente der Antriebseinheiten beziehungsweise entsprechende Leistungen berücksichtigt werden.
Es ist ein Aspekt der Erfindung, dass die den jeweiligen Antriebseinheiten wie den elektrischen Maschinen beziehungsweise Umrichtern zugeordneten maximalen Werte für die maschinenindividuellen Drehmomentvorgaben variabel sein können und zwar vorzugsweise derart, dass die maximal verfügbare Leistung des elektrischen Energiespeichers nicht überschritten wird. Dabei kann die maximal verfügbare Leistung des elektrischen Energiespeichers sowohl eine maximal abgegebene Leistung als auch eine maximal aufgenommene Leistung des Energiespeichers sein. Mit der Erfindung ist es möglich, die antriebseinheitsindividuellen Drehmomentvorgaben weitgehend unabhängig voneinander einstellen zu können. Insbesondere kann eine Aufteilung der nutzerseitigen Antriebsdrehmomentvorgabe auf die antriebseinheitsindividuellen Drehmomentvorgaben in einem weiten Bereich frei gewählt werden. Lediglich die maximale Leistung des elektrischen Energiespeichers ist als Randbedingung zu beachten.

Die elektrischen Antriebseinheiten können sowohl im motorischen Betrieb als auch im generatorischen Betrieb betrieben werden. Solche elektrische Maschinen können beispielsweise Gleichstrommaschinen, Drehstrommaschinen oder dergleichen sein.

Die Fahrzeugräder können an einer, zwei oder auch mehreren Achsen des Fahrzeugs vorgesehen sein. In der Regel weist das Fahrzeug wenigstens zwei jeweils mit wenigstens einem Rad besetzte Achsen auf. Bei einem einspurigen Fahrzeug sind beispielsweise an den zwei Achsen jeweils ein Fahrzeugrad vorgesehen. In einem solchen Fall kann die Antriebseinheit, insbesondere die elektrische Maschine vorzugsweise jeweils als Nabenmaschine ausgebildet sein, das heißt, sie ist in das Fahrzeugrad integriert. Darüber hinaus kann natürlich auch ein zwei- oder mehrspuriges Fahrzeug vorgesehen sein. Bei einem zweispurigen Fahrzeug können beispielsweise wenigstens zwei Achsen vorgesehen sein, an deren Enden beidseitig jeweils ein Fahrzeugrad vorgesehen ist. Vorzugsweise sind die Fahrzeugräder einer Achse gemeinsam mittels einer elektrischen Maschine angetrieben. Darüber hinaus kann aber auch vorgesehen sein, dass bei einem mehrspurigen Fahrzeug zwei oder mehr der Fahrzeugräder mittels Nabenmaschinen vorzugsweise individuell antreibbar sind.

Der elektrische Energiespeicher ist beispielsweise durch einen Akkumulator, einen Kondensator, insbesondere einen Super-Cap, Kombinationen hiervon oder dergleichen gebildet. Darüber hinaus kann der elektrische Energiespeicher auch Steuermittel umfassen, mittels denen die Verteilung der elektrischen Energie innerhalb des elektrischen Energiespeichers gesteuert werden kann. Der elektrische Energiespeicher umfasst ferner ein Kommunikationsmittel zum Übermitteln von zumindest eines Wertes der maximal verfügbaren Leistung. Dieser Wert kann von wenigstens einem Parameter des elektrischen Energiespeichers abhängig sein und wiederholt ermittelt werden. Der Parameter kann eine Temperatur, eine Kapazität, einen Alterungszustand, eine Elektrolytwichte, Kombinationen hiervon oder dergleichen umfassen. Der Wert für die maximal verfügbare Leistung wird an die Fahrzeugsteuerung übermittelt.

Der elektrische Energiespeicher ist somit vorzugsweise aufladbar, so dass er während auch eines Bremsbetriebs durch die elektrischen Antriebseinheiten erzeugte elektrische Energie aufnehmen und speichern kann.

Ein Nutzer kann mittels einer Eingabeeinrichtung wie einem Pedal oder dergleichen der Fahrzeugsteuerung eine Antriebsmomentvorgabe vorgeben. Die Antriebsmomentvorgabe kann aber auch durch eine Geschwindigkeitssteuerung oder dergleichen erfolgen. Aufgrund der Antriebsmomentvorgabe erzeugt die Fahrzeugsteuerung antriebseinheitsindividuelle Drehmomentvorgaben, die an die jeweiligen Antriebseinheiten wie den elektrischen Maschinen beziehungsweise deren Umrichtern übermittelt werden.

Eine antriebseinheitsindividuelle Drehmomentvorgabe ist eine Drehmomentvorgabe der Fahrzeugsteuerung für eine elektrische Antriebseinheit, die antriebsseitig das individuell vorgegebene Drehmoment gemäß der Drehmomentvorgabe der Fahrzeugsteuerung erzeugen soll. Die Drehmomentvorgabe kann sowohl eine das Fahrzeug beschleunigende Drehmomentvorgabe als auch eine das Fahrzeug verzögernde Drehmomentvorgabe sein. Entsprechend wird die elektrische Antriebseinheit im Motorbetrieb oder im Generatorbetrieb betrieben. Dies erlaubt es, mit der Antriebsvorrichtung nicht nur eine Beschleunigung für das Fahrzeug zu realisieren, sondern zugleich auch eine Verzögerung, so dass durch die Verzögerung erzeugte elektrische Energie für Rekuperationszwecke genutzt werden kann.

Anders als im Stand der Technik wird bei der Erfindung der maximale Wert für die antriebseinheitsindividuelle Drehmomentvorgabe unter Berücksichtigung der maximal verfügbaren Leistung des elektrischen Energiespeichers weitestgehend frei ermittelt. Vorzugsweise erfolgt das Ermitteln durch ein Berechnen derart, dass eine mathematische Summe der verfügbaren maximalen Werte für die antriebseinheitsindividuellen Drehmomentvorgaben berechnet wird, so dass die Summe die maximal verfügbare Leistung des elektrischen Energiespeichers nicht überschreitet. Das heißt, die Fahrzeugsteuerung kann die jeweiligen maximalen Werte für die antriebseinheitsindividuellen Drehmomentvorgaben in einem weiten Bereich variieren, beispielsweise in Abhängigkeit eines jeweiligen Betriebszustands des Fahrzeugs. So kann vorgesehen sein, dass bei einer Beschleunigung des Fahrzeugs die maximalen Werte für die antriebseinheitsindividuellen Drehmomentvorgaben für eine vordere Achse kleiner als für eine hintere Achse gewählt werden. Bei einem Verzögern des Fahrzeugs kann eine entsprechend umgekehrte Auswahl der maximalen Werte vorgesehen sein. Insgesamt erlaubt es die Erfindung dadurch, die jeweilige elektrische Antriebseinheit mit einer höheren Leistung als im Stand der Technik üblich zu betreiben und somit die Fahrdynamik des Fahrzeugs deutlich zu verbessern.

Im Unterschied zum Stand der Technik ist es bei der Erfindung nicht erforderlich, zunächst den Antriebseinheiten Werte für die maximale Leistung zu übermitteln, unter deren Berücksichtigung die Antriebseinheiten dann ihre maximalen Drehmomente ermitteln und an die Fahrzeugsteuerung zurückübermitteln. Bei der Erfindung braucht die Fahrzeugsteuerung keine Leistungswerte an die Antriebseinheiten zu übermitteln. Sie erhält von den Antriebseinheiten Werte für die jeweiligen maximalen Drehmomente unabhängig von irgendeiner für den jeweiligen Umrichter verfügbaren Leistung. Diese Werte für die maximalen Drehmomente sind daher im wesentlichen antriebseinheitsspezifisch, das heißt, können unter anderem abhängig sein von dieren Konstruktion, Bauart, Umgebungsbedingungen wie Umgebungstemperatur und/oder dergleichen. Es kann sich dabei auch lediglich um einen festen Wert der jeweiligen Antriebseinheit handeln. Daher kann die Fahrzeugsteuerung die Verteilung der maximal verfügbaren Leistung in einem Bereich vornehmen, der die Möglichkeiten, insbesondere den Stellbereich des Stands der Technik weit überschreitet.

Entsprechend sieht die Erfindung eine Fahrzeugsteuerung zum Steuern einer wenigstens zwei mittels jeweils einer elektrischen Antriebseinheit mechanisch gekoppelten Fahrzeugräder eines zumindest teilweise elektrisch angetriebenen Fahrzeugs umfassenden Antriebsvorrichtung, mit wenigstens einem Anschluss zum Anschließen der elektrischen Antriebseinheiten, wobei die Fahrzeugsteuerung dazu eingerichtet ist, den elektrischen Antriebseinheiten im bestimmungsgemäßen Betrieb jeweils eine antriebseinheitsindividuelle Drehmomentvorgabe bereitzustellen, wobei dass die Fahrzeugsteuerung eine Berechnungseinheit aufweist, die dazu eingerichtet ist, ein maximales Gesamtdrehmoment unter Berücksichtigung einer maximal verfügbaren Leistung des elektrischen Energiespeichers zu ermitteln, und mittels des maximalen Gesamtdrehmoments eine aus den antriebseinheitsindividuellen Drehmomentvorgaben gebildete Summe zu begrenzen. Die Fahrzeugsteuerung ist insbesondere dazu eingerichtet, das erfindungsgemäße Verfahren auszuführen.

Dementsprechend schlägt die Erfindung ferner ein Fahrzeug mit einem wenigstens zwei mittels jeweils einer elektrischen Antriebseinheit mechanisch gekoppelten Fahrzeugräder umfassenden Antrieb vor, wobei die elektrischen Antriebseinheiten zum Beziehen von elektrischer Energie von einem elektrischen Energiespeicher in einen motorischen Betrieb und/oder zum Zuführen von elektrischer Energie zum elektrischen Energiespeicher in einem generatorischen Betrieb am elektrischen Energiespeicher angeschlossen sind. Das Fahrzeug weist eine Fahrzeugsteuerung der Erfindung auf. Insbesondere ist die Fahrzeugsteuerung dazu eingerichtet, das Verfahren der Erfindung auszuführen. Darüber hinaus ist die Fahrzeugsteuerung vorzugsweise dazu eingerichtet, den elektrischen Antriebseinheiten im bestimmungsgemäßen Betrieb jeweils eine antriebseinheitsindividuelle Drehmomentvorgabe bereitzustellen

Demzufolge sind die vorhergehenden Ausführungen bezüglich des Verfahrens ebenso auf die Fahrzeugsteuerung und das Fahrzeug gemäß der Erfindung übertragbar.

Eine weitere Ausgestaltung der Erfindung sieht vor, dass die maximalen Werte für die antriebseinheitsindividuellen Drehmomentvorgaben bei einer Änderung der maximal verfügbaren Leistung angepasst werden. Eine Änderung der maximal verfügbaren Leistung kann dadurch entstehen, dass der elektrische Energiespeicher aufgrund von Einwirkungen durch die Umgebung, beispielsweise eine Umgebungstemperatur oder dergleichen, innere Parameter wie seine Kapazität ändert. Die Änderung kann aber auch durch Veränderung interner Eigenschaften des elektrischen Energiespeichers, beispielsweise eines Innenwiderstands, einer Temperaturüberwachung oder dergleichen bewirkt sein. Diese Änderungen der Parameter.können zu einer Änderung der maximal verfügbaren Leistung des elektrischen Energiespeichers führen.

Die maximal verfügbare Leistung kann sowohl eine maximal verfügbare abgebbare Leistung und/oder eine maximal verfügbare aufnehmbare Leistung sein. Vorzugsweise ist die Fahrzeugsteuerung mit dem elektrischen Energiespeicher in Kommunikationsverbindung und verfügt somit über eine aktuelle Information bezüglich des Werts der maximal verfügbaren Leistung des elektrischen Energiespeichers. Auf Basis dieses aktuellen Wertes berechnet die Fahrzeugsteuerung die maximalen Werte für die antriebseinheitsindividuellen Drehmomentvorgaben vorzugsweise in Abhängigkeit eines gewünschten Fahrzustands. Unter Berücksichtigung dieser Parameter ermittelt beziehungsweise berechnet die Fahrzeugsteuerung die antriebseinheitsindividuellen Drehmomentvorgaben für den aktuellen Fahrzustand des Fahrzeugs.

Gemäß einer Weiterbildung wird vorgeschlagen, dass der maximale Wert für die antriebseinheitsindividuelle Drehmomentvorgabe unter Berücksichtigung eines Wirkungsgrads der elektrischen Antriebseinheiten, insbesondere der elektrischen Maschine und/oder eines der entsprechenden elektrischen Maschine zugeordneten Umrichters ermittelt wird. Dabei wird davon ausgegangen, dass der ermittelte maximale Wert für die antriebseinheitsindividuelle Drehmomentvorgabe von der entsprechenden elektrischen Antriebseinheit auch tatsächlich bereitgestellt werden kann. Vorzugsweise ist vorgesehen, dass die elektrische Antriebseinheit entsprechend ausgelegt sind. Durch Berücksichtigung der Wirkungsgrade kann die Genauigkeit verbessert werden. Vorzugsweise wird der entsprechende Wirkungsgrad von der elektrischen Maschine und/oder von dem der entsprechenden elektrischen Maschine zugeordneten Umrichter an die Fahrzeugsteuerung übermittelt. Dies hat den Vorteil, dass die Fahrzeugsteuerung immer über den aktuellen nötigen Wirkungsgrad verfügen kann und auf dessen Basis die Berechnung durchführen kann. Darüber hinaus kann eine Änderung des Wirkungsgrads berücksichtigt werden, beispielsweise, wenn der Wirkungsgrad der elektrischen Maschine und/oder gegebenenfalls des zugeordneten Umrichters nicht über den gesamten Stellbereich konstant ist, sich beispielsweise in Abhängigkeit des zu stellenden Drehmoments verändert. Hierdurch kann die Genauigkeit weiter erhöht werden.

Gemäß der Erfindung wird vorgeschlagen, dass die Fahrzeugsteuerung jeder der elektrischen Antriebseinheiten eine maximale elektrische Leistung unter der Maßgabe zuweist, dass eine Summe der zugewiesenen maximalen elektrischen Leistungen durch die maximal verfügbare Leistung des elektrischen Energiespeichers begrenzt wird. Dadurch kann sichergestellt werden, dass der elektrische Energiespeicher einerseits nicht überlastet wird, und andererseits eine möglichst freie, flexible Verteilung der verfügbaren Leistung des elektrischen Energiespeichers auf die jeweiligen elektrischen Antriebseinheiten erreicht werden kann. Dadurch kann auf der elektrischen Seite die Sicherheit des Betriebs des elektrischen Energiespeichers verbessert werden.

Gemäß der Erfindung wird vorgeschlagen, dass die Fahrzeugsteuerung maximale Werte für antriebseinheitsindividuelle Leistungen der Antriebseinheiten unter Berücksichtigung der antriebseinheitsindividuellen Drehmomentvorgaben ermittelt und an die Antriebseinheiten übermittelt. Die elektrischen Antriebseinheiten können hierdurch eigene Überwachungsfunktionen adaptieren, wodurch eine Überlastung des elektrischen Energiespeichers verbessert vermieden werden kann.
Gemäß einem weiteren Aspekt der Erfindung wird vorgeschlagen, dass die Fahrzeugsteuerung zum Ermitteln des maximalen Werts für die antriebseinheitsindividuelle Drehmomentvorgabe eine Leistung einer an dem elektrischen Energiespeicher angeschlossenen elektrischen Komponente berücksichtigt. Die elektrische Komponente kann sowohl ein elektrischer Verbraucher wie beispielsweise eine Beleuchtung des Fahrzeugs, eine Klimaanlage des Fahrzeugs oder dergleichen sein, sie kann aber auch eine Energiequelle, beispielsweise eine Solarzelle, eine Brennstoffzelle, Kombinationen hiervon oder dergleichen sein. Insofern kann die Leistung sowohl einen positiven Wert als auch eine negativen Wert aufweisen. Die Berücksichtigung der angeschlossenen elektrischen Komponente kann somit die Zuverlässigkeit und Dynamik der Funktion der Fahrzeugsteuerung weiter verbessern und gegebenenfalls den Stellbereich für die Drehmomente der elektrischen Antriebseinheiten erweitern.

Gemäß einer Weiterbildung wird vorgeschlagen, dass die elektrische Komponente zum Erhöhen der maximal verfügbaren Leistung ab- oder zugeschaltet wird. Hierdurch kann ein weiter verbesserter Bereich für die Fahrdynamik geschaffen werden, indem der durch den elektrischen Energiespeicher abdeckbare Bereich der maximal verfügbaren Leistung erweitert werden kann. Ist zum Beispiel vorgesehen, eine Verzögerung zu erhöhen, so kann ergänzend ein elektrischer Verbraucher beispielsweise die Beleuchtung des Fahrzeugs oder die Klimaanlage zugeschaltet werden, um die verfügbare Leistung für den Verzögerungsbetrieb zu erhöhen. Gleichermaßen kann vorgesehen sein, dass zur Erhöhung einer Beschleunigung eine Brennstoffzelle aktiviert wird.

Eine weitere Ausgestaltung der Erfindung sieht vor, dass die maximal verfügbare Leistung in Abhängigkeit eines Ladezustands und/oder eines Alterungszustands des elektrischen Energiespeichers ermittelt wird. Veränderungen der maximal verfügbaren Leistung des elektrischen Energiespeichers, die beispielsweise vom Ladungszustand oder auch vom Alterungszustand abhängig sein können, können durch die Fahrzeugsteuerung für das Verfahren zum Steuern des Antriebs des Fahrzeugs berücksichtigt werden. Hierdurch kann die Zuverlässigkeit insgesamt weiter verbessert werden.

Weitere Vorteile und Merkmale ergeben sich aus der folgenden Beschreibung eines Ausführungsbeispiels anhand zweier Figuren. In den Figuren bezeichnen gleiche Bezugszeichen gleiche Bauteile und Funktionen.

Es zeigen:
- Fig. 1: schematisch ein Blockschaltbild einer Antriebsvorichtung für ein elektrisch antreibbares Fahrzeug gemäß dem Stand der Technik und
- Fig. 2: schematisch eine Blockschaltbilddarstellung für eine Antriebsvorrichtung eines Fahrzeugs gemäß der Erfindung.

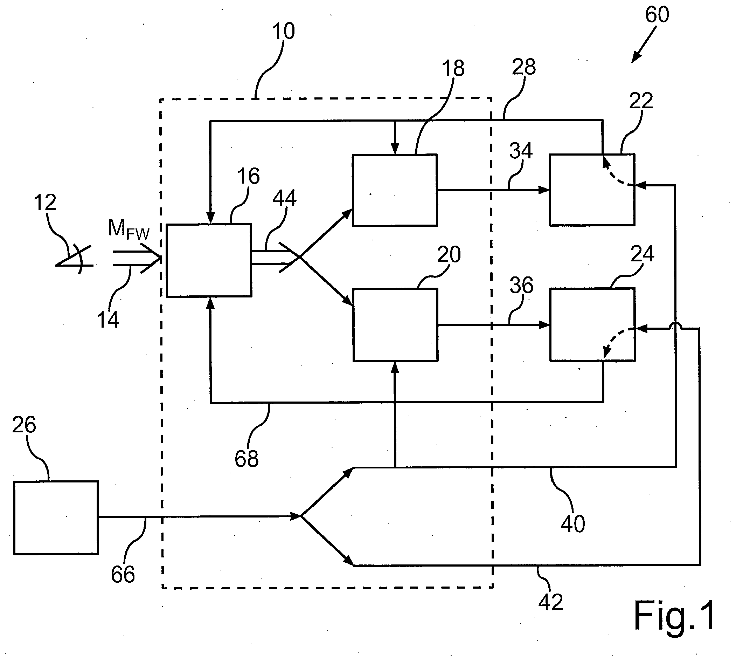

Fig. 1 zeigt in schematischer Blockschaltbilddarstellung eine Antriebsvorrichtung 60 eines nicht weiter dargestellten Fahrzeugs, das elektrisch mittels zweier elektrischer Antriebseinheiten 22, 24, die ebenfalls nicht dargestellte elektrische Maschinen umfassen, antreibbar ist. Die elektrischen Maschinen sind als rotierende elektrische Maschinen, insbesondere vorliegend als Drehstrommaschinen ausgebildet. Entsprechend umfassen die Antriebseinheiten 22, 24 Wechselrichter als Umrichter, um die elektrischen Maschinen an einen Gleichstromzwischenkreis elektrisch anzukoppeln. Für das Ausführungsbeispiel ist vorgesehen, dass das Fahrzeug zwei angetriebene Achsen mit jeweils zwei Rädern an den jeweiligen Enden der Achsen aufweist, wobei jede Achse mittels einer der beiden elektrischen Antriebseinheiten 22, 24 beziehungsweise deren elektrische Maschinen antreibbar ist. Zu diesem Zweck sind die elektrischen Maschinen mit den jeweiligen Achsen mechanisch gekoppelt.

Jede der beiden elektrischen Maschinen ist jeweils über einen ihr zugeordneten Umrichter der Antriebseinheiten 22, 24 an einen Akkumulator 26 des Fahrzeugs angeschlossen, der zugleich auch den Zwischenkreis bereitstellt,, so dass ein elektrischer Energieaustausch zwischen den jeweiligen elektrischen Maschinen und dem Akkumulator 26 ermöglicht ist.

Der Akkumulator 26 steht mit einer Fahrzeugsteuerung 10 in Kommunikationsverbindung und übermittelt an diese die von ihm maximal verfügbare Leistung 66. Die Leistung 66 kann sowohl eine maximal aufnehmbare Leistung als auch eine maximal abgebbare Leistung sein. Überwiegend sind die maximale Leistung für die Energieaufnahme und für die Energieabgabe gleich groß. In einem weiteren Ausführungsbeispiel kann jedoch auch vorgesehen sein, dass unterschiedliche Werte für die maximale Leistungsaufnahme und für die maximale Leistungsabgabe vorgesehen sein können. In diesem Fall werden dann natürlich zwei Werte für eine maximal verfügbare Leistung an die Fahrzeugsteuerung 10 übermittelt.

Die Fahrzeugsteuerung 10 erfasst den Wert für die maximal verfügbare Leistung 66 und erzeugt hieraus zwei maximale Leistungen 40, 42 für die jeweiligen Antriebseinheiten 22, 24, wobei die entsprechenden Werte für die maximalen Leistungen 40, 42 an die jeweiligen Antriebseinheiten 22, 24 übermittelt werden. Die Antriebseinheiten 22, 24 stellen ihren Betrieb derart ein, dass die jeweils zugeordnete maximale Leistung 40, 42 durch die jeweilige Antriebseinheit 22, 24 nicht überschritten wird.

Die Antriebseinheiten 22, 24 ermitteln aus den jeweils zugeordneten maximalen Leistungen 40, 42 entsprechende maximale Drehmomente 28, 68, die sie unter der Bedingung der jeweiligen maximalen Leistung 40, 42 mittels der an ihnen jeweils angeschlossenen elektrischen Maschine bereitstellen können. Die maximalen Drehmomente 28, 68 werden an die Fahrzeugsteuerung 10 übermittelt.

Die Fahrzeugsteuerung 10 ist ferner an ein Pedal 12 angeschlossen, mittels welchem ein Fahrer des Fahrzeugs eine Antriebsmomentvorgabe erzeugen kann. Die Antriebsmomentvorgabe 14 wird vom Pedal 12 an die Fahrzeugsteuerung 10 übermittelt.

In einem ersten Berechnungsblock 16 der Fahrzeugsteuerung 10, die die Antriebsmomentvorgabe 14 erhält, wird unter Berücksichtigung der jeweiligen maximalen Drehmomente 28, 68 der Antriebseinheiten 22, 24 eine Gesamtdrehmomentvorgabe 44 erzeugt. Die Gesamtdrehmomentvorgabe 44 wird jeweils hälftig den jeweiligen Antriebseinheiten 22, 24 zugeordneten Berechnungseinheiten 18, 20 zugeführt. Die Berechnungseinheiten 18, 20 erzeugen hieraus unter Berücksichtigung der jeweiligen maximalen Drehmomente 28, 68 antriebseinheitsindividuelle Drehmomentvorgaben 34, 36, die an die jeweiligen Antriebseinheiten 22, 24 übermittelt werden. Die Antriebseinheiten 22, 24 stellen dann das entsprechende Drehmoment mittels der an ihnen angeschlossenen elektrischen Maschinen gemäß der antriebseinheitsindividuellen Drehmomentvorgabe 34, 36 bereit. Entsprechend werden die Achsen des Fahrzeugs angetrieben.

Diese bekannte Ausgestaltung hat sich zwar bewährt, jedoch erweist sich die starre Aufteilung der maximal verfügbaren Leistung des Akkumulators 26 auf die jeweiligen Antriebseinheiten 22, 24 als nachteilig. Die Fahrdynamik ist dadurch begrenzt.

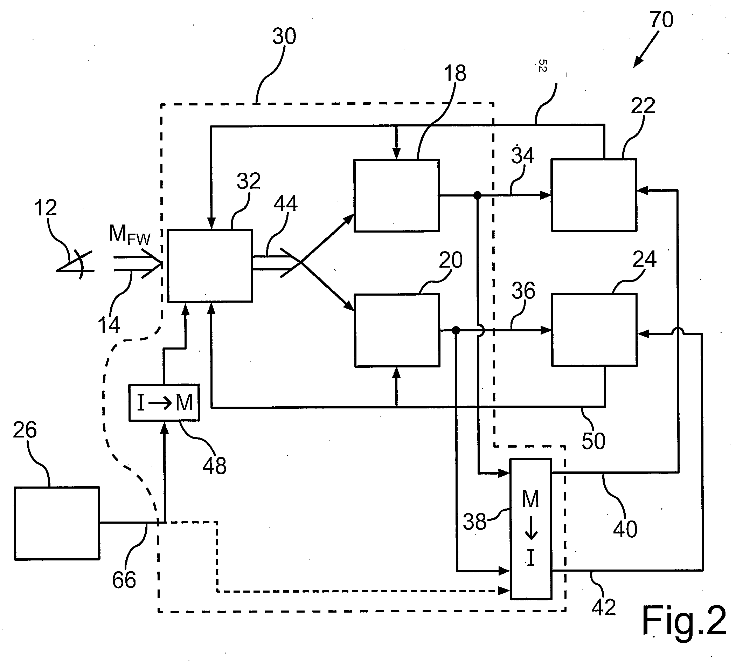

Die Erfindung schafft hier Abhilfe. Dies wird anhand des Ausführungsbeispiels der Erfindung gemäß Fig. 2 weiter erläutert. Das Ausführungsbeispiel gemäß Fig. 2 basiert auf dem Stand der Technik, wie er anhand von Fig. 1 beschrieben ist. Deshalb wird ergänzend auf diese Ausführungen verwiesen.

Die Erfindung gemäß Fig. 2 unterscheidet sich vom Stand der Technik dadurch, dass die maximal verfügbare Leistung 66 des Akkumulators 26 nicht mehr starr verteilt, beispielsweise hälftig wie im Ausführungsbeispiel der Fig. 1, auf die jeweiligen Antriebseinheiten 22, 24 verteilt wird.

Anders als beim Stand der Technik übermitteln die Antriebseinheiten 22, 24 hier nicht die auf die zugewiesene elektrische Leistung bezogenen Werte für das jeweils maximale Drehmoment, sondern ein maximales Drehmoment unabhängig von einer Leistungszuweisung. Dieses maximale Drehmoment ist unter anderem abhängig von Aufbau der Antriebseinheiten 22, 24, aktueller Betriebsparameter wie Temperatur und/oder dergleichen. Die Fahrzeugsteuerung 30 erhält demnach die maximalen Werte der stellbaren Drehmomente, die bei ausreichend verfügbarer Leistung möglich sind.

Bei der Erfindung sind deshalb Berechnungseinheiten 38, 48 vorgesehen, die Bestandteil einer Fahrzeugsteuerung 30 sind, und die den Wert für die maximal verfügbare Leistung 66 des Akkumulators 26 erhalten. Entsprechend ist nunmehr eine Berechnungseinheit 32 vorgesehen, die dazu ausgebildet ist, ergänzend einen maximalen Wert für ein gesamtes Drehmoment aufgrund der maximal verfügbaren Leistung 66 des Akkumulators 26 bei der Berechnung des Gesamtdrehmoments 44 zu berechnen. Demzufolge berücksichtigt die Berecheneinheit 32 ergänzend zur Berechnungseinheit 16 der Fig. 1 ein maximales Gesamtdrehmoment, das von einer Berechnungseinheit 48 bereitgestellt wird.

Die Berechnungseinheit 48 berechnet das maximale Gesamtdrehmoment unter Berücksichtigung der maximal verfügbaren Leistung 66 des elektrischen Energiespeichers 26, das heißt, auf Basis des von dem Akkumulator 26 übermittelten Wertes für die maximal verfügbare Leistung 66.

Die Berechnungseinheit 32 berechnet - entsprechend der Recheneinheit 16 in Fig. 1 maximale Drehmomente 28, 68 - maximale Werte für mittels der Berechungseinheiten 18, 20 antriebseinheitsindividuell ermittelten Drehmomentvorgaben 34, 36, wodurch mittels des maximalen Gesamtdrehmoments die aus den antriebseinheitsindividuellen Drehmomentvorgaben gebildete Summe begrenzt ist. Die Drehmomentvorgaben steuern die Antriebseinheiten 22, 24, sodass diese entsprechend das jeweils gewünschte Drehmoment bereitstellen.

Die Antriebseinheiten 22, 24 entsprechen insoweit im wesentlichen den Antriebseinheiten, wie sie bereits zu Fig. 1 beschrieben worden sind. Abweichend sind die Antriebseinheiten 22, 24 bei der Erfindung so eingestellt, dass die von ihnen bereitgestellten Werte für die maximal stellbaren Drehmomente 52, 50 unabhängig von einer Leistungszuweisung sind. Das heißt, die maximal stellbaren Drehmomente 52, 50 sind - im Unterschied zum Stand der Technik - antriebseinheitsspezifische Werte, die beispielsweise im einfachsten Fall lediglich einen konstanten Wert aufgrund einer Antriebseinheitskonstruktion bilden.

Ergänzend wird - ebenfalls wie in Fig. 1 - von der Berechnungseinheit 32 die mittels des Pedals 12 erzeugte Antriebsdrehmomentvorgabe 14 berücksichtigt.

Im Unterschied zum Stand der Technik erfolgt hier die Aufteilung der Drehmomente nicht fix hälftig, sondern kann entsprechend der Ausgestaltung gewünschter Fahrdynamik variiert werden.

Darüber hinaus ist im Unterschied zum Stand der Technik die Berechnungseinheit 38 vorgesehen ist, die vorzugsweise ebenfalls als Eingangswert den Wert der maximal verfügbaren Leistung 66 des Akkumulators 26 erhält. Darüber hinaus erhält die Berechnungseinheit 38 auch die Werte für die antriebseinheitsindividuelle Drehmomentvorgabe 34, 36 für die jeweiligen Antriebseinheiten 22, 24, die in entsprechende Leistungen umgerechnet werden. Wird ferner die maximal verfügbare Leistung 66 des Akkumulators 26 berücksichtigt, so kann eine sich ergebende Leistungsreserve anteilig, beispielsweise hälftig, den jeweiligen Werten für die maximale Leistung 40, 42 zugeschlagen werden. Daraus ermittelt die Berechnungseinheit 38 für die jeweiligen Antriebseinheiten 22, 24 Werte für maximale Leistungen 40, 42, die wiederum zu den Antriebseinheiten 22, 24 übermittelt werden.

In den Werten für die maximalen Drehmomente 52, 50 können weitere Parameter, beispielsweise umrichterindividuelle Parameter berücksichtigt werden, so beispielsweise die Umrichtertemperatur, Parameter der jeweils angeschlossenen elektrischen Maschine und/oder dergleichen.
In der vorliegenden Ausgestaltung ist vorgesehen, dass die Berechnungseinheit 38 zur Ermittlung der umrichterindividuellen maximalen Leistungen 40, 42 zunächst die Summe aus den individuellen Drehmomentvorgaben 34, 36 entsprechenden Leistungen bildet, sodann eine Differenz zum Wert der maximal verfügbaren Leistung 66 des Akkumulators 26 bildet und schließlich die Differenz hälftig auf die jeweils ermittelte umrichterindividuelle Leistung draufschlägt. Dieser Wert wird dann als maximale Leistung 40, 42 an die jeweiligen Antriebseinheiten 22, 24 übermittelt.

Die Erfindung erlaubt es, bei Änderungen der maximal verfügbaren Leistung 66 nicht nur pauschal eine hälftige Anpassung für die Antriebseinheiten 22, 24 vorzusehen, sondern hier eine entsprechende Gewichtung für den jeweils aktuellen Fahrbetrieb vorzunehmen. Dadurch kann die Fahrdynamik deutlich verbessert werden.

Ein wesentlicher Unterschied zum Stand der Technik ist, dass die Antriebseinheiten 22, 24 nicht - wie beim Stand der Technik üblich - die zugewiesene maximale Leistung bei der Erzeugung des Werts für das maximale Drehmoment berücksichtigen, sondern stattdessen das maximale Drehmoment 52, 50 ausgeben, welches sie aufgrund ihrer bauartbedingten Eigenschaften und weiterer Parameter wie Temperatur beziehungsweise der angeschlossenen elektrischen Maschine erzeugen können. Daraus ergibt sich, dass die Berechnungseinheiten 18, 20 nicht mehr nur hälftig eine maschinenindividuelle Drehmomentvorgabe im Rahmen des halben maximalen Drehmoments erzeugen, sondern dies durch die Recheneinheit 32 bewirkt wird, die eine entsprechende Verteilung der Drehmomente unter Berücksichtigung der maximalen verfügbaren Leistung 66 des Akkumulators 26 vornimmt.

Das Ausführungsbeispiel dient lediglich der Erläuterung der Erfindung und ist für diese nicht beschränkend. So können natürlich sowohl Leistungen als auch Drehmomente positive und auch negative Werte aufweisen.

Insbesondere kann die Erfindung sowohl beim Beschleunigen als auch beim Verzögern des Fahrzeugs entsprechend eingesetzt werden. Ist die Spannung am Zwischenkreis im wesentlichen konstant, kann anstelle der Leistung auch der jeweilige Strom betrachtet werden.

Die für das erfindungsgemäße Verfahren beschriebenen Vorteile und Merkmale sowie Ausführungsformen gelten gleichermaßen für die erfindungsgemäße Fahrzeugssteuerung sowie ein mit der Fahrzeugssteuerung ausgerüstetes Fahrzeug.

## Patentansprüche

1. Verfahren zum Steuern einer wenigstens zwei mittels jeweils einer elektrischen Antriebseinheit (22, 24) mechanisch gekoppelten Fahrzeugräder umfassenden Antriebsvorrichtung (70) eines zumindest teilweise elektrisch angetriebenen Fahrzeugs, wobei die elektrischen Antriebseinheiten (22, 24) jeweils in einem motorischen Betrieb elektrische Energie von einem elektrischen Energiespeicher (26) beziehen und/oder in einem generatorischen Betrieb dem elektrischen Energiespeicher (26) elektrische Energie zuführen, wobei die elektrischen Antriebseinheiten (22, 24) im bestimmungsgemäßen Betrieb ein Drehmoment gemäß einer antriebseinheitsindividuellen Drehmomentvorgabe (34, 36) einer Fahrzeugsteuerung (30) bereitstellen,
wobei ein maximales Gesamtdrehmoment unter Berücksichtigung einer maximal verfügbaren Leistung (66) des elektrischen Energiespeichers (26) ermittelt und mittels des maximalen Gesamtdrehmoments eine aus den antriebseinheitsindividuellen Drehmomentvorgaben (34, 36) gebildete Summe begrenzt wird, wobei die Fahrzeugsteuerung (30) jeder der elektrischen Antriebseinheiten (22, 24) eine maximale elektrische Leistung unter der Maßgabe zuweist, dass eine Summe der zugewiesenen maximalen elektrischen Leistungen durch die maximal verfügbare Leistung des elektrischen Energiespeichers (26) begrenzt wird,
**dadurch gekennzeichnet,**
**dass** die Fahrzeugsteuerung (30) maximale Werte für antriebseinheitsindividuelle Leistungen der Antriebseinheiten (22, 24) unter Berücksichtigung der antriebseinheitsindividuellen Drehmomentvorgaben ermittelt und an die Antriebseinheiten (22, 24) übermittelt.

2. Verfahren nach Anspruch 1, **dadurch gekennzeichnet, dass** die maximalen Werte (52, 50) für die antriebseinheitsindividuellen Drehmomentvorgaben bei einer Änderung der maximal verfügbaren Leistung (66) angepasst werden.

3. Verfahren nach Anspruch 1 oder 2, **dadurch gekennzeichnet, dass** der maximale Wert (52, 50) für die antriebseinheitsindividuelle Drehmomentvorgabe (34, 36) unter Berücksichtigung eines Wirkungsgrads einer elektrischen Maschine und/oder eines der entsprechenden elektrischen Maschine zugeordneten Umrichters der elektrischen Antriebseinheit (22, 24) ermittelt wird.

4. Verfahren nach einem der Ansprüche 1 bis 3, **dadurch gekennzeichnet, dass** die Fahrzeugsteuerung (30) zum Ermitteln des maximalen Werts (52, 50) für die antriebseinheitsindividuelle Drehmomentvorgabe eine Leistung einer an den elektrischen Energiespeicher (26) angeschlossenen elektrischen Komponente berücksichtigt.

5. Verfahren nach Anspruch 4, **dadurch gekennzeichnet, dass** die elektrische Komponente zum Erhöhen der maximal verfügbaren Leistung (66) ab- oder zugeschaltet wird.

6. Verfahren nach einem der Ansprüche 1 bis 5, **dadurch gekennzeichnet, dass** die maximal verfügbare Leistung (66) in Abhängigkeit eines Ladungszustands und/oder eines Alterungszustands des elektrischen Energiespeichers (26) ermittelt wird.

7. Fahrzeugsteuerung (30) zum Steuern einer wenigstens zwei mittels jeweils einer elektrischen Antriebseinheit (22, 24) mechanisch gekoppelten Fahrzeugräder eines zumindest teilweise elektrisch angetriebenen Fahrzeugs umfassenden Antriebsvorrichtung (70), mit wenigstens einem Anschluss zum Anschließen der elektrischen Antriebseinheiten (22, 24), wobei die Fahrzeugsteuerung (30) dazu eingerichtet ist, den elektrischen Antriebseinheiten (22, 24) im bestimmungsgemäßen Betrieb jeweils eine antriebseinheitsindividuelle Drehmomentvorgabe (34, 36) bereitzustellen,
wobei die Fahrzeugsteuerung (30) eine Berechnungseinheit (48)
aufweist, die dazu eingerichtet ist, ein maximales Gesamtdrehmoment unter Berücksichtigung einer maximal verfügbaren Leistung (66) des elektrischen Energiespeichers (26) zu ermitteln, und mittels des maximalen Gesamtdrehmoments eine aus den antriebseinheitsindividuellen Drehmomentvorgaben (34, 36) gebildete Summe zu begrenzen und jeder der elektrischen Antriebseinheiten (22, 24) eine maximale elektrische Leistung unter der Maßgabe zuzuweisen, so dass eine Summe der zugewiesenen maximalen elektrischen Leistungen durch die maximal verfügbare Leistung des elektrischen Energiespeichers (26) begrenzt ist,
**dadurch gekennzeichnet,**
**dass** die Fahrzeugsteuerung (30) ferner eingerichtet ist, maximale Werte für antriebseinheitsindividuelle Leistungen der Antriebseinheiten (22, 24) unter Berücksichtigung der antriebseinheitsindividuellen Drehmomentvorgaben zu ermitteln und an die Antriebseinheiten (22, 24) zu übermitteln.

8. Fahrzeug mit einer wenigstens zwei mittels jeweils einer elektrischen Antriebseinheiten (22, 24) mechanisch gekoppelten Fahrzeugräder umfassenden Antriebsvorrichtung (70), wobei die elektrischen Antriebseinheiten (22, 24) zum Beziehen von elektrischer Energie von einem elektrischen Energiespeicher (26) in einem motorischen Betrieb und/oder zum Zuführen von elektrischer Energie zum elektrischen Energiespeicher (26) in einem generatorischen Betrieb am elektrischen Energiespeicher (26) angeschlossen sind,
**gekennzeichnet durch**
eine Fahrzeugsteuerung (30) nach Anspruch 7.

## Claims

1. Method for controlling a drive device (70) of a vehicle that is at least partially electrically driven, said drive device comprising at least two vehicle wheels mechanically coupled by means of respectively one electric drive unit (22, 24) wherein the electric drive units (22, 24) draw electric energy from an electric energy storage unit (26) in a motor operation and/or supply electric energy to the electric energy storage unit (26) in a generator operation wherein the electric drive units (22, 24) provide a torque in accordance with a drive unit-specific torque specification (34, 36) of a vehicle control system (30) in the intended operation,
wherein a maximum overall torque is determined in consideration of a maximum available output (66) of the electric energy storage unit (26) and a total formed by the drive unit-specific torque specifications (34, 36) is limited by means of the maximum overall torque, wherein the vehicle control system (30) allocates a maximum electric output to each of the electric drive units (22, 24) based on a total of the allocated maximum electric outputs being limited by the maximum available output of the electric energy storage unit (26),
**characterised in that**
the vehicle control system (30) determines maximum values for drive unit-specific outputs of the drive units (22, 24) in consideration of the drive unit-specific torque specifications and transmits them to the drive units (22, 24).

2. Method according to claim 1, **characterised in that** the maximum values (52, 50) for the drive unit-specific torque specifications are adapted when the maximum available output (66) is changed.

3. Method according to claim 1 or 2, **characterised in that** the maximum value (52, 50) for the drive unit-specific torque specification (34, 36) is determined in consideration of a degree of effectiveness of an electric machine and/or of an inverter of the electric drive unit (22, 24) assigned to the corresponding electric machine.

4. Method according to any one of claims 1 to 3, **characterised in that** the vehicle control system (30) considers an output of an electric component connected to the electric energy storage unit (26) to determine the maximum value (52, 50) for the drive unit-specific torque specification.

5. Method according to claim 4, **characterised in that** the electric component is switched on or off to increase the maximum available output (66).

6. Method according to any one of claims 1 to 5, **characterised in that** the maximum available output (66) is determined depending on a loading state and/or an age state of the electric energy storage unit (26).

7. Vehicle control system (30) for controlling a drive device (70) comprising at least two vehicle wheels of a vehicle that is at least partially electrically driven, said vehicle wheels being mechanically coupled by means of respectively one electric drive unit (22, 24), with at least one terminal for connecting the electric drive units (22, 24) wherein the vehicle control system (30) is configured to respectively provide a drive unit-specific torque specification (34, 36) to the electric drive units (22, 24) in the intended operation,
wherein the vehicle control system (30) has a calculation unit (48) configured to determine a maximum overall torque in consideration of a maximum available output (66) of the electric energy storage unit (26) and to limit a total formed by the drive unit-specific torque specifications (34, 36) by means of the maximum overall torque and to allocate a maximum electric output to each of the electric drive units (22, 24) based on a total of the allocated maximum electric outputs being limited by the maximum available output of the electric energy storage unit (26),
**characterised in that**
the vehicle control system (30) is also configured to determine maximum values for drive unit-specific outputs of the drive units (22, 24) in consideration of the drive-unit specific torque specifications and to transmit them to the drive units (22, 24).

8. Vehicle having a drive device (70) comprising at least two vehicle wheels mechanically coupled by means of respectively one electric drive unit (22, 24) wherein the electric drive units (22, 24) are connected to the electric energy storage unit (26) in order to draw electric energy from an electric energy storage unit (26) in a motor operation and/or to supply electric energy to the electric energy storage unit (26) in a generation operation,
**characterised by**
a vehicle control system (30) according to claim 7.

## Revendications

1. Procédé de commande d'un dispositif d'entraînement (70), comprenant au moins deux roues de véhicule couplées mécaniquement au moyen d'une unité d'entraînement électrique (22, 24) à chaque fois, d'un véhicule entraîné au moins partiellement de façon électrique, dans lequel les unités d'entraînement électriques (22, 24), dans un mode de fonctionnement moteur, tirent de l'énergie électrique d'un accumulateur d'énergie électrique (26) et/ou, dans un mode de fonctionnement générateur, envoient de l'énergie électrique à l'accumulateur d'énergie électrique (26), dans lequel les unités d'entraînement électriques (22, 24) fournissent lors d'un fonctionnement conforme un couple selon une prescription de couple (34, 36), propre à chaque unité d'entraînement, d'une commande de véhicule (30),
dans lequel un couple total maximal est déterminé en tenant compte d'une puissance maximale disponible (66) de l'accumulateur d'énergie électrique (26) et une somme formée à partir des prescriptions de couple (34, 36) propres aux unités d'entraînement est limitée au moyen du couple total maximal, dans lequel la commande de véhicule (30) attribue à chacune des unités d'entraînement électriques (22, 24) une puissance électrique maximale dans la mesure où une somme des puissances électriques maximales attribuées est limitée par la puissance maximale disponible de l'accumulateur d'énergie électrique (26),
**caractérisé en ce que**
la commande de véhicule (30) détermine des valeurs maximales pour des puissances, propres aux unités d'entraînement respectives, des unités d'entraînement (22, 24) en tenant compte des prescriptions de couple propres aux unités d'entraînement et les transmet aux unités d'entraînement (22, 24).

2. Procédé selon la revendication 1, **caractérisé en ce que** les valeurs maximales (52, 50) pour les prescriptions de couple propres aux unités d'entraînement sont adaptées lors d'une modification de la puissance maximale disponible (66).

3. Procédé selon la revendication 1 ou 2, **caractérisé en ce que** la valeur maximale (52, 50) pour la prescription de couple (34, 36) propre à une unité d'entraînement est déterminée en tenant compte d'un rendement d'une machine électrique et/ou d'un convertisseur, associé à la machine électrique correspondante, de l'unité d'entraînement électrique (22, 24).

4. Procédé selon l'une des revendications 1 à 3, **caractérisé en ce que**, pour déterminer la valeur maximale (52, 50) destinée à la prescription de couple propre à une unité d'entraînement, la commande de véhicule (30) prend en compte une puissance d'un composant électrique raccordé à l'accumulateur d'énergie électrique (26).

5. Procédé selon la revendication 4, **caractérisé en ce que** le composant électrique est branché ou débranché afin d'augmenter la puissance maximale disponible (66).

6. Procédé selon l'une des revendications 1 à 5, **caractérisé en ce que** la puissance maximale disponible (66) est déterminée en fonction d'un état de charge et/ou d'un état de vieillissement de l'accumulateur d'énergie électrique (26).

7. Commande de véhicule (30) destinée à commander un dispositif d'entraînement (70) comprenant au moins deux roues de véhicule, couplées mécaniquement au moyen d'une unité d'entraînement électrique (22, 24) à chaque fois, d'un véhicule entraîné au moins partiellement de façon électrique, avec au moins un raccordement destiné à raccorder les unités d'entraînement électriques (22, 24), dans laquelle la commande de véhicule (30) est conçue pour fournir aux unités d'entraînement électriques (22, 24), lors d'un fonctionnement conforme, à chaque fois une prescription de couple (34, 36) propre à chaque unité d'entraînement,
dans laquelle la commande de véhicule (30) comporte une unité de calcul (48) qui est conçue pour déterminer un couple total maximal en tenant compte d'une puissance maximale disponible (66) de l'accumulateur d'énergie électrique (26) et pour limiter au moyen du couple total maximal une somme formée à partir des prescriptions de couple (34, 36) propres aux unités d'entraînement et pour attribuer à chacune des unités d'entraînement électriques (22, 24) une puissance électrique maximale dans la mesure où une somme des puissances électriques maximales attribuées est limitée par la puissance maximale disponible de l'accumulateur d'énergie électrique (26),
**caractérisée en ce que**
la commande de véhicule (30) est aussi conçue pour déterminer des valeurs maximales pour des puissances, propres aux unités d'entraînement respectives, des unités d'entraînement (22, 24) en tenant compte des prescriptions de couple propres aux unités d'entraînement et pour les transmettre aux unités d'entraînement (22, 24).

8. Véhicule avec un dispositif d'entraînement (70) comprenant au moins deux roues de véhiculé couplées mécaniquement au moyen d'une unité d'entraînement électrique (22, 24) à chaque fois, les unités d'entraînement électriques (22, 24) étant raccordées à l'accumulateur d'énergie électrique (26) pour, dans un mode de fonctionnement moteur, tirer de l'énergie électrique d'un accumulateur d'énergie électrique (26) et/ou, dans un mode de fonctionnement générateur, envoyer de l'énergie. électrique à l'accumulateur d'énergie électrique (26),
**caractérisé par**
une commande de véhicule (30) selon la revendication 7.
